# EUROPEAN PATENT APPLICATION

(11) **EP 4 852 196 A1**
(43) Date of publication of application: **09.12.2026**
(21) Application number: 25892569.2
(22) Date of filing: 13.11.2025
(51) Int. Cl.: H01M 50/383, H01M 50/24, H01M 50/543, H01M 50/249

(54) **BATTERY PACK WITH GAS IGNITION PREVENTION**

(30) Priority: 18.11.2024 KR 20240164436
(71) Applicant: LG Energy Solution, Ltd., Seoul 07335 (KR)
(72) Inventor: LEE, Jaesung, Daejeon 34122 (KR); PARK, Sanggab, Daejeon 34122 (KR); KIM, Haejin, Daejeon 34122 (KR); CHOI, Jisoo, Daejeon 34122 (KR); KIM, Kihoon, Daejeon 34122 (KR); CHOI, Jangwon, Daejeon 34122 (KR)
(74) Representative: Plasseraud IP
(86) International application number: PCT/KR2025/018655
(87) International publication number: WO 2026/106322

(57) **Abstract**

The present invention provides a structure of a battery pack including: a pack frame; a connector block having an exposed upper portion and installed in the pack frame; a module array comprising a plurality of battery modules arranged from a first widthwise end of the connector block along a widthwise direction; and a blocking member arranged with the plurality of battery modules in the widthwise direction, the blocking member dividing the module array into a plurality of unit module arrays, each of the plurality of unit module arrays comprising one or more battery modules, wherein the blocking member comprises: a partition interposed between and dividing a pair of adjacent unit module arrays; and a pair of blocking portions extending from the partition in a first widthwise direction.

## Description

### [TECHNICAL FIELD]

This application claims the benefit of priority based on Korean Patent Application No. 10-2024-0164436 filed on November 18, 2024, entire content disclosed in the document of the patent application is included as a part of this specification.

The present invention relates to a structure of a battery pack in which a module array including a plurality of battery modules is accommodated in a pack frame to prevent gas ignition during thermal runaway.

### [BACKGROUND ART]

Secondary batteries, which provide ease of application depending on the product group and have electrical characteristics such as high energy density, are widely applied not only to portable devices, but also to electric vehicles or hybrid vehicles driven by an electrical driving source.

These secondary batteries are attracting attention as a new energy source for improving eco-friendliness and energy efficiency, not only because they have the primary advantage of being able to dramatically reduce the use of fossil fuels, but also because they have the primary advantage of not generating any by-products due to energy use.

The types of secondary batteries widely used today include lithium ion batteries, lithium polymer batteries, nickel cadmium batteries, nickel hydrogen batteries and nickel zinc batteries. The operating voltage of these unit secondary batteries, i.e. unit battery cells is approximately 2.5V to 4.2V. Therefore, when a higher output voltage is required, a battery module is constituted by connecting multiple battery cells in series and or parallel, and multiple battery modules are also connected in series and or parallel to constitute a battery pack.

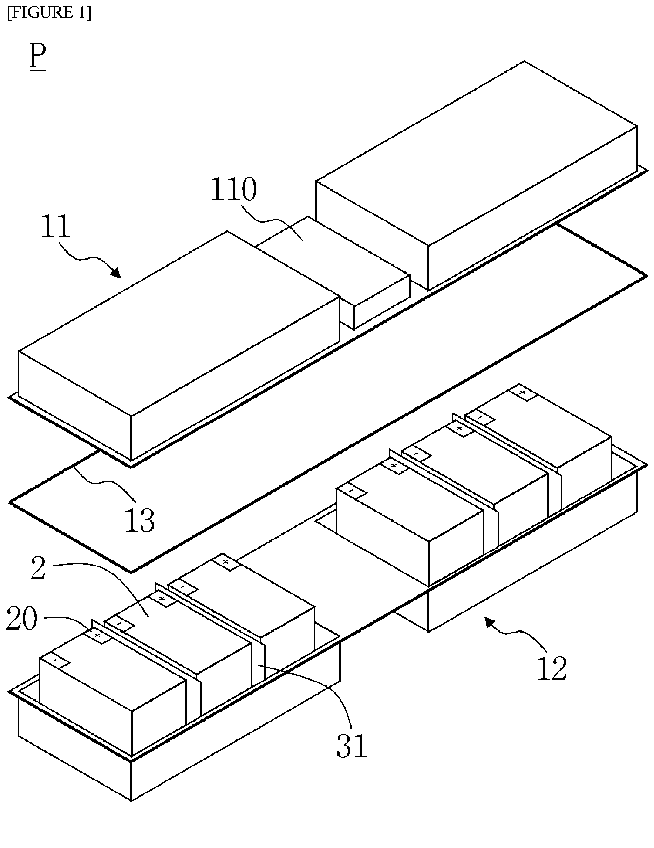

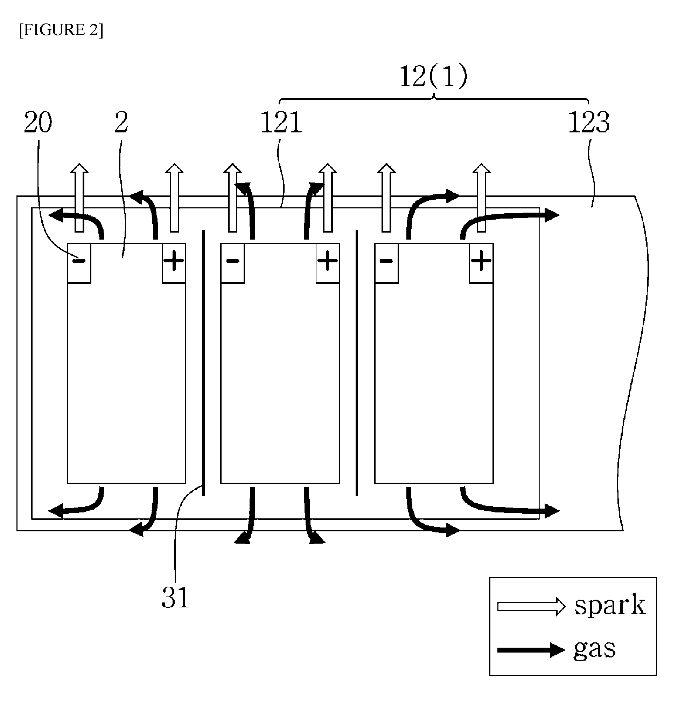

FIG. 1 illustrates the structure of a battery pack, and FIG. 2 illustrates module arrays of the battery pack of FIG. 1. Referring to FIGS. 1 and 2, a battery pack P has a structure in which plurality of battery modules 2 are accommodated in a pack frame 1, which comprises an upper frame 11, a lower frame 12, and a gasket 13 sealing the space between the upper frame 11 and the lower frame 12. Here, the plurality of battery modules 2 are installed with the upper portions thereof exposed on the lower frame 12 so as to form an array arranged along the widthwise direction at both sides of a connector block 110 to which the battery modules 2 are electrically connected.

Meanwhile, when thermal runaway occurs in one of the battery modules 2 due to a short circuit or other cause, there is a risk of thermal propagation between modules, potentially causing a chain reaction of thermal runaway throughout the pack. To prevent this, heat-resistant blocking members 31 are interposed between the battery modules 2 to prevent thermal propagation therebetween.

Nevertheless, when thermal runaway occurs in some or all of the battery modules 2, a large amount of flammable gas and electrical sparks are generated. As shown in FIG. 2, the gas is discharged in front and rear directions of the battery module 2 and propagates in widthwise direction through narrow passages inside the front and rear sidewalls of the pack frame 1, and the sparks originate from a terminal 20 and the connector block 110 provided at the front end of the battery module 2.

Here, when the high-temperature gas meets the spark generated from the connector block 110 and external oxygen, the three elements of flame are met, resulting in ignition. Similarly, when the gas melts the gasket 13 and is discharged in front and rear directions of the pack frame 1, the gas is ignited by coming into contact with the spark generated from the terminal 20 and external oxygen. When flame is generated by ignition, the thermal runaway speed is much faster than simple gas-induced thermal propagation, and the risk of explosion, etc., also increases.

### [DISCLOSURE]

### [TECHNICAL PROBLEM]

In order to solve above-described problems of the prior art described above, it is an object of the present invention to provide a structure of a battery pack wherein the risk of rapid thermal runaway and explosion caused by to ignition is reduced.

It is an object of the present invention to provide a structure of a battery pack in which gas discharge is facilitated while eliminating the risk of ignition, particularly a structure of a battery pack in which a plurality of battery modules are arranged in one or more rows with respect to each other and/or electrically connecting portion such as connector blocks.

It is another object of the present invention to provide a structure of a battery pack capable of preventing thermal propagation between modules, thereby preventing thermal runaway at the pack level from occurring in the first place.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery pack including: a pack frame; a connector block having an exposed upper portion and installed in the pack frame; a module array including a plurality of battery modules arranged from a first widthwise end of the connector block along a widthwise direction; and a blocking member arranged with the plurality of battery modules in the widthwise direction, the blocking member dividing the module array into a plurality of unit module arrays, each of the plurality of unit module arrays including one or more battery modules.

The blocking member according to the present invention includes: a partition interposed between and dividing a pair of adjacent unit module arrays; and a pair of blocking portions extending from the partition in a first widthwise direction.

According to the present invention, the blocking member prevents the gas discharged from the battery module from flowing toward the connector block while preventing the spark from being exposed to the gas discharged from the front and rear of the pack frame, thereby preventing the three elements of the flame from being satisfied at the connector block and/or the front and rear of the pack frame, and preventing the risk of rapid thermal runaway and explosion due to ignition.

The pack frame according to an embodiment may include: a connecting portion where the connector block is installed; a first accommodating portion connected to a first widthwise end of the connecting portion; and a second accommodating portion connected to a second widthwise end of the connecting portion. More specifically, the pack frame may have a shape in which the first accommodating portion and the second accommodating portion are roughly symmetrical or point-symmetrical with respect to the connecting portion.

Here, the module array may include: a first module array accommodated in the first accommodating portion and arranged adjacent to the first widthwise end of the connector block; and a second module array accommodated in the second accommodating portion and arranged adjacent to a second widthwise end of the connector block. That is, the plurality of battery modules according to an embodiment may be arranged to have approximate left-right symmetry or point symmetry with respect to the connector block.

According to an embodiment, the pack frame may include: an upper frame covering an upper portion of a first module array and having the connector block installed thereon; and a lower frame covering a lower portion of the first module array. Here, the upper frame and the lower frame may be sealed while facing each other along a single closed curve. According to the embodiment, when thermal runaway occurs in the battery module and gas is discharged into the inside of the pack frame, the seal between the upper frame and the lower frame may be broken due to the high temperature and pressure of the gas, and the gas may be discharged to the outside through the gap between the upper frame and the lower frame.

Specifically, the upper frame and the lower frame may be sealed by a gasket interposed therebetween. The gasket may include a thermoplastic synthetic resin material that may be melted by the high temperature of the gas, and in such case, the gas may be discharged horizontally outward through the gap between the upper frame and the lower frame as described above.

According to an embodiment, the battery pack may further include a terminal exposed at at least one of front and rear ends of each of the plurality of battery modules intersecting the widthwise direction. When the terminal is installed at the front end and/or rear end of the battery module as described above, it is facilitated to electrically connect the battery modules to each other arranged in the widthwise direction. However, since the area where the terminal is installed is inevitably an area where gas generated within the battery module is likely to be discharged, the gas is discharged to the front and/or rear of the battery module in such case when gas is generated during thermal runaway in the battery module.

According to an embodiment, each of the plurality of unit module arrays excluding one closest to the connector block, may include the same number of battery modules as or more than the number of battery modules in other unit module array adjacent to a second widthwise end. That is, when the unit module array includes first to n^{th} unit module arrays (n is 1 or greater), the number of battery modules constituting any (m+1) ^{th} unit module array (m is 1 or greater) thereamong is equal to or greater than that of battery modules constituting the m^{th} unit module array. This is because the farther a module is from the connector block, the lower the risk of thermal runaway and thermal propagation to other modules.

In contrast, each of the unit module arrays, excluding one closest to the connector block, may include the same number of battery modules. In such case, the length of the blocking portion may be the same regardless of which unit module array the blocking member is arranged to surround, which is advantageous in terms of commonality of parts.

According to an embodiment, it is preferable that the blocking members be arranged so as to avoid the front and rear of a first one closest to the connector block among the plurality of unit module arrays. When the front and rear of the first unit module array are blocked by the blocking member, there is a risk that gas discharged from the first unit module array in front and rear directions flows upward or in the second widthwise direction toward the connector block. In actual experiments, it was confirmed that the risk of ignition and the rate of thermal runaway were significantly lower when the gas generated from the first unit module array was discharged in front and rear directions of the pack frame than when the gas was discharged toward the connector block.

According to an embodiment, it is preferable that the plurality of blocking members are arranged at a predetermined distance from each other in the widthwise direction. Accordingly, the gas discharged from each of the plurality of unit module arrays and guided to flow in the first widthwise direction may be discharged to the front and rear exterior of the pack frame through the spaces between the blocking members arranged at appropriate intervals. When the gas is not properly discharged in the horizontal direction, there is a risk that the gas is discharged upward and flow in random directions, including toward the connector block.

It is preferable that the pair of blocking portions are spaced apart from front and rear of each of plurality of the battery modules by a predetermined distance or more. Accordingly, a passage is provided through which gases discharged from the battery module in front and rear directions may flow in the first widthwise direction, and such passage may serve to prevent the gases from flowing in an unintended direction, such as upward.

According to an embodiment, the distance between the pair of blocking portions in front and rear directions increases as a distance between the blocking member and the connector block increases. Accordingly, the gas discharged from the battery module may be guided to flow more smoothly in the first widthwise direction without generating eddies.

The present invention also provides a vehicle including the battery pack. The battery pack may be built into a vehicle as a power source. The vehicle may include an electric vehicle, a hybrid vehicle, etc.

### [ADVANTAGEOUS EFFECTS]

The present invention provides a structure of a battery pack in which the risk of rapid thermal runaway and explosion caused by ignition is reduced by preventing the three elements of flame from being satisfied at the connector block and/or the sealed portion of the pack frame.

The present invention provides a structure of a battery pack in which gas discharge is facilitated while eliminating the risk of ignition, particularly a structure of a battery pack in which a plurality of battery modules are arranged in one or more rows with respect to each other and/or electrically connecting portion such as connector blocks.

Another advantage of a battery pack according to an embodiment of the present invention lies in preventing thermal propagation between modules, thereby preventing thermal runaway at the pack level from occurring in the first place.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates the structure of a battery pack, and FIG. 2 illustrates module arrays of the battery pack of FIG. 1.
FIG. 3 illustrates the structure of a battery pack according to a first embodiment.
FIG. 4 illustrates the configuration of a module array according to the first embodiment.
FIG. 5 illustrates discharge paths of spark and gas in a module array according to the first embodiment.
FIG. 6 illustrates the configuration of a module array according to a second embodiment.
FIG. 7 illustrates discharge paths of spark and gas in a module array according to the second embodiment.
FIG. 8 illustrates a vehicle including a battery pack according to an embodiment of the present invention.

### [DESCRIPTION OF REFERENCE NUMERALS]

1: pack frame
11: upper frame
110: connector block
12: lower frame
121: first accommodating portion
122: second accommodating portion
123: connecting portion
13: gasket
2: battery module
20: terminal
31: (first) blocking member
311: partition
321: blocking portion
32: second blocking member
321: partition
322: blocking portion
A1: (first) module array
A2: second module array
UA: unit module array
A11: first unit module array
A12: second unit module array
A13: third unit module array
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Throughout the specification, "widthwise direction" refers to any horizontal direction in which battery modules are arranged, and "first widthwise direction" and "second widthwise direction" are directions that are opposite to each other and parallel to the widthwise direction. Here, "front" and "rear" directions are defined as horizontal directions intersecting the widthwise direction. The term "horizontal direction" refers to a direction intersecting any heightwise direction, regardless of any absolute orientation such as the direction of gravity, or a direction on a plane intersecting the vertical direction. Furthermore, when the terms "front and rear" are used herein, the terms "front and rear" basically mean "front" and/or "rear."

Hereinafter, preferred embodiments of the present invention will be described with reference to the accompanying drawings.

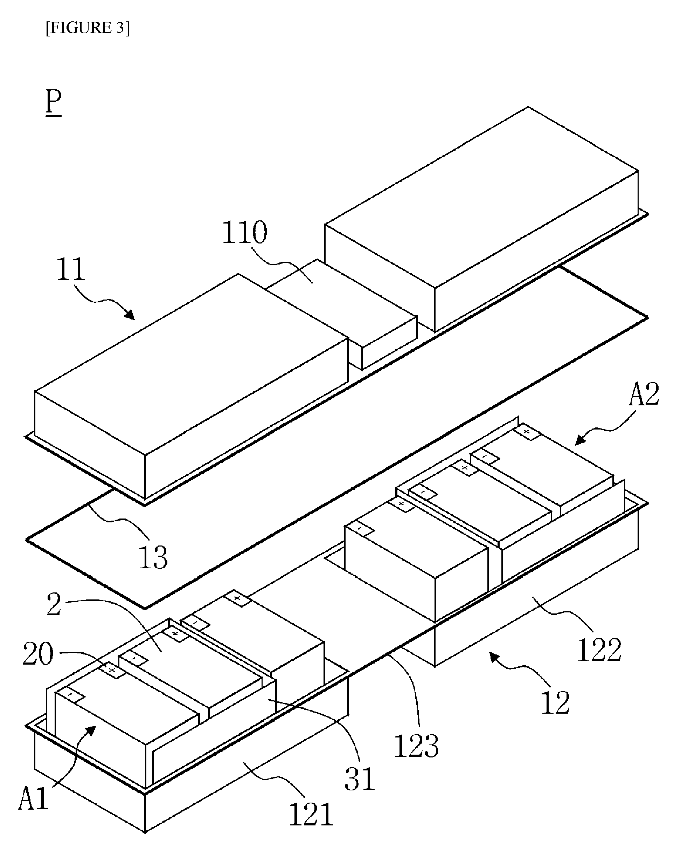

FIG. 3 illustrates a structure of a battery pack according to an embodiment of the present invention. Referring to FIG. 3, a battery pack P according to an embodiment of the present invention includes: a pack frame 1; module arrays A1 and A2 accommodated in the pack frame 1 and including a plurality of battery modules 2 arranged in a widthwise direction; and a blocking member 31 arranged in the widthwise direction together with the plurality of battery modules 2.

The pack frame 1 according to an embodiment may include: a connecting portion 123 where the connector block 110 is installed; a first accommodating portion 121 connected to a first widthwise end of the connecting portion 123; and a second accommodating portion 122 connected to a second widthwise end of the connecting portion 123. More specifically, the pack frame 1 may have a shape in which the first accommodating portion 121 and the second accommodating portion 122 are roughly symmetrical or point-symmetrical with respect to the connecting portion 123.

According to an embodiment, the pack frame 1 may include: an upper frame 11 covering an upper portion of a first module array A1 and having the connector block 110 installed thereon; and a lower frame 12 covering a lower portion of the first module array A1. Here, the first accommodating portion 121, the second accommodating portion 122 and the connecting portion 123 may be provided at the lower frame 12. Alternatively, the first accommodating portion 121, the second accommodating portion 122 and the connecting portion 123 may be areas and/or spaces defined by the upper frame 11 and/or the lower frame 12.

Here, the module arrays A1 and A2 may include: a first module array A1 accommodated in the first accommodating portion 121 and arranged adjacent to the first widthwise end of the connector block 110; and a second module array A2 accommodated in the second accommodating portion 122 and arranged adjacent to a second widthwise end of the connector block 110. That is, the plurality of battery modules 2 according to an embodiment may be arranged to have approximate left-right symmetry or point symmetry with respect to the connector block 110.

According to an embodiment, each of the battery modules 2 constituting the module arrays A1 and A2 may include a terminal 20 exposed at least at one of the front and rear ends intersecting the widthwise direction. The terminals 20 are electrically connected to each other and/or the connector block 110, thereby connecting the battery modules 2 to each other and/or the outside.

When the terminals 20 are installed at the front and/or rear ends of the battery module 2 as described above, it is easy to electrically connect the battery modules 2 to each other arranged in widthwise direction. However, since the area where the terminals 20 are installed is inevitably an area where gas generated within the battery module 2 is likely to be discharged, the gas is discharged to the front and/or rear of the battery module 2 in such case when gas is generated during thermal runaway in the battery module 2.

According to the embodiment, the upper frame 11 and the lower frame 12 may be sealed while facing each other along a single closed curve. When thermal runaway occurs in the battery module 2 and gas is discharged into the inside of the pack frame 1, the seal between the upper frame 11 and the lower frame 12 may be broken due to the high temperature and pressure of the gas, and the gas may be discharged to the outside through the gap between the upper frame 11 and the lower frame 12.

Specifically, the upper frame 11 and the lower frame 12 may be sealed by a gasket 13 interposed therebetween. The gasket 13 may include a thermoplastic synthetic resin material that may be melted by the high temperature of the gas, and in such case, the gas may be discharged horizontally outward through the gap between the upper frame 11 and the lower frame 12 as described above.

Hereinafter, for convenience of description, the first module array A1 is referred to as "the module array A1" without any specific limitations. The second module array A2 may have a structure that corresponds to, is symmetrical to, or is point-symmetrical with that of "the module array A1" described below. However, this is not required.

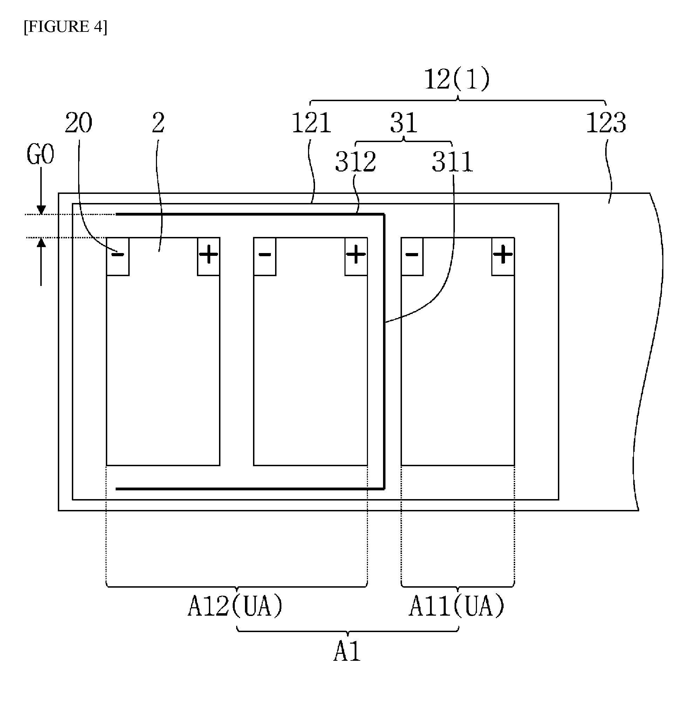

FIG. 4 illustrates the configuration of a module array according to the first embodiment. Referring to FIG. 4, the module array A1 according to the first embodiment includes a first unit module array A11 and a second unit module array A12. The first unit module array A11 is arranged adjacent to the first widthwise end of the connector block 110 and includes one battery module 2, while the second unit module array A12 is arranged adjacent to the first widthwise end of the first unit module array A11 and includes two battery modules 2.

The number of modules in the second unit module array A12 is selected to be greater than that in the first unit module array A11 because the risk of thermal runaway or heat transfer to other modules is lowered and the possibility of heat transfer due to high-temperature gas is increased as the distance from the connector block 110 and the center of the battery pack increases.

According to the embodiment, only one blocking member 31 is provided, and the single blocking member 31 blocks the front and rear of the second unit module array A12 and is configured to separate the second unit module array A12 and the first unit module array A11. That is, the blocking member 31 is positioned to avoid the front and rear of the first unit module array A11. Accordingly, gas is discharged upward from the first unit module array A11, which is closest to the connector block 110, and flows toward the connector block 110, thereby preventing ignition caused by reacting with a spark generated in the connector block 110. In an actual experiment, it was confirmed that the risk of ignition and the speed of thermal runaway were significantly lower when gas generated from the first unit module array A11 was discharged in front and rear directions of the pack frame 1 than when discharged toward the connector block 110.

The blocking portion 312 of the single blocking member 31 is spaced apart from the battery module 2 constituting the second unit module array A12 by a predetermined distance G0 in front and rear direction. Accordingly, a path for the gas discharged from the second unit module array A12 in front and rear directions is provided such that the gas flows in the first widthwise direction.

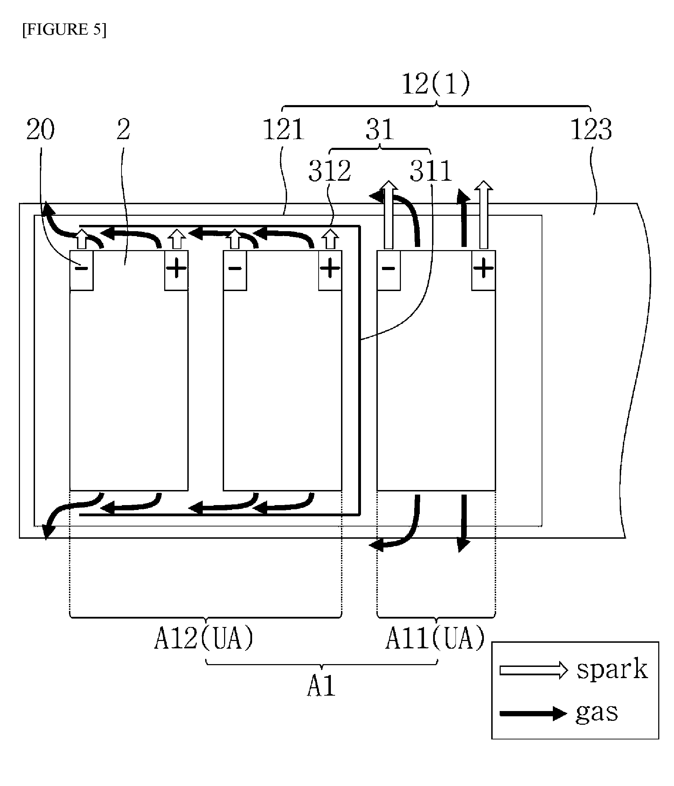

FIG. 5 illustrates discharge paths of spark and gas in a module array according to the first embodiment. Referring to FIG. 5, when thermal runaway occurs in the battery pack P according to the embodiment, the gas generated from the first unit module array A11 are directly discharged in front and rear directions, melts the gasket 13 at high temperatures and then discharged between the upper frame 11 and the lower frame 12. Here, the gas generated from the first unit module array A11 is discharged in front and rear directions rather than the upward direction where the connector block 110 is installed or the second widthwise direction such that ignition does not occur at the connector block 110 due to insufficient combustible material despite spark generation and contact with external oxygen.

The gas generated from the second unit module array A12 flows along the passage inside the blocking member 31 in the first widthwise direction and is then discharged in front and rear directions. After melting the gasket 13 at high temperature, the gas is discharged between the upper frame 11 and the lower frame 12. Here, the spark generated at the terminal 20 is blocked by the blocking portion 312 of the blocking member 31 such that contact with external oxygen is prevented. Accordingly, while the gas and external oxygen come into contact with each other at the front and rear of the pack frame 1, no energy above the ignition point is supplied, and thus ignition does not occur as the spark does not reach.

Meanwhile, according to the embodiment, the partition 311 of the blocking member 31 prevents direct thermal propagation between the first unit module array A11 and the second unit module array A12 such that the occurrence of thermal runaway in successive pack units is suppressed.

A second embodiment described below is an extended embodiment wherein the configuration of the first embodiment is generalized or extended to a battery pack including a larger number of modules.

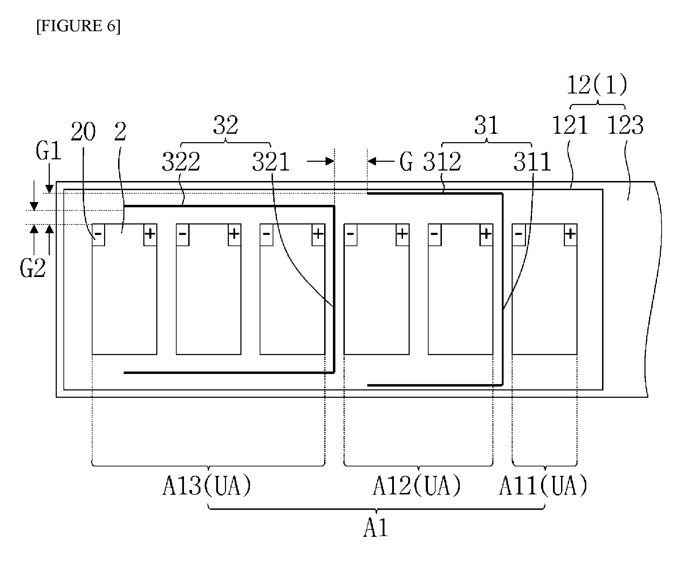

FIG. 6 illustrates the configuration of a module array according to a second embodiment. Referring to FIG. 6, the module array A1 according to the first embodiment includes: the first unit module array A11; the second unit module array A12; and the third unit module array A13. The first unit module array A11 may be arranged adjacent to the first widthwise end of the connector block 110 and may include one battery module 2, the second unit module array A12 may be arranged adjacent to the first widthwise end of the first unit module array A11 and may include two battery modules 2, and the third unit module array A13 may be arranged adjacent to the first widthwise end of the second unit module array A12 and may include three battery modules 2.

To generalize, in the extended second embodiment, each of the plurality of unit module arrays UA excluding one closest to the connector block 110, may include the same number of battery modules 2 as or more than the number of battery modules 2 in other unit module array adjacent to a second widthwise end. That is, when the unit module array includes first to n^{th} unit module arrays UA (n is 1 or greater), the number of battery modules 2 constituting any (m+1)^{th} unit module array (m is 1 or greater) thereamong is equal to or greater than that of battery modules 2 constituting the m^{th} unit module array. This is because the farther a module is from the connector block 110, the lower the risk of thermal runaway and thermal propagation to other modules.

In contrast, each of the unit module arrays UA, excluding one closest to the connector block 110, may include the same number of battery modules 2. In such case, the length of the blocking portion 312 may be the same regardless of which unit module array the blocking member 31 is arranged to surround, which is advantageous in terms of commonality of parts.

According to the embodiment, only two blocking members 31 is provided, and the blocking portion 312 of the first blocking member 31 of the two blocks the front and rear of the second unit module array A12 and the partition 311 of the single blocking member 31 is configured to separate the second unit module array A12 and the first unit module array A11, and the blocking portion 322 of the second blocking member 31 of the two blocks the front and rear of the third unit module array A13 and the partition 321 of the second blocking member 31 is configured to separate the third unit module array A13 and the second unit module array A12. That is, the blocking member 31 is positioned to avoid the front and rear of the first unit module array A11. Accordingly, gas is discharged upward from the first unit module array A11, which is closest to the connector block 110, and flows toward the connector block 110, thereby preventing ignition caused by reacting with a spark generated in the connector block 110. In an actual experiment, it was confirmed that the risk of ignition and the speed of thermal runaway were significantly lower when gas generated from the first unit module array A11 was discharged in front and rear directions of the pack frame 1 than when discharged toward the connector block 110.

According to the embodiment, the first blocking member 31 and the second blocking member 32 may be spaced apart from each other by a predetermined distance G in the widthwise direction. Accordingly, the gas discharged from the second unit module array A12 may flow in front and rear directions at an appropriate distance from the connector block 110 and be discharged out of the pack frame 1 without forming a vortex, flowing backward, or flowing upward.

To generalize, it is preferable that the plurality of blocking members 31 and 32 are arranged at a predetermined distance from each other in the widthwise direction. Accordingly, the gas discharged from each of the plurality of unit module arrays UA and guided to flow in the first widthwise direction may be discharged to the front and rear exterior of the pack frame 1 through the spaces between the blocking members 31 and 32 arranged at appropriate intervals. When the gas is not properly discharged in the horizontal direction, there is a risk that the gas is discharged upward and flow in random directions, including toward the connector block 110.

As in the first embodiment, it is preferable that the blocking portions 312 and 322 of the blocking members 31 and 32 are spaced from the unit module array UA in front and rear directions by a predetermined distance or more. Specifically, the first blocking member 31 may be spaced apart from the battery module 2 constituting the second unit module array A12 in front and rear directions by a predetermined distance G1, and the second blocking member 32 may be spaced from the battery module 2 constituting the third unit module array A13 in front and rear directions by another predetermined distance G2. Accordingly, a passage is provided through which gases discharged in front and rear directions from the second unit module array A12 and the third unit module array A13 may flow in the first widthwise direction.

That is, for all of the blocking members 31 and 32, it is preferable that the pair of blocking portions 312 are spaced apart from the battery module 2 by a predetermined distance in front and rear directions. Accordingly, a passage is provided through which gases discharged from the battery module in front and rear directions may flow in the first widthwise direction, and such passage may serve to prevent the gases from flowing in an unintended direction, such as upward.

Here, it is preferable that the distance between the blocking portions 312 of the first blocking member 31 in front and rear directions is equal to or smaller than the distance between the blocking portions 322 of the second blocking member 32 in front and rear directions. That is, it is preferable that the distance G1 between the blocking portion 312 of the first blocking member 31 and the battery module 2 in front and rear directions is equal to or smaller than the distance G2 between the blocking portion 322 of the second blocking member 32 and the battery module 2 in front and rear directions.

To generalize, the distance between the pair of blocking portions 312 and 322 in front and rear directions increases as a distance between the blocking members 31 and 32 and the connector block 110 increases. Accordingly, the gas discharged from the battery module 2 may be guided to flow more smoothly in the first widthwise direction without generating eddies.

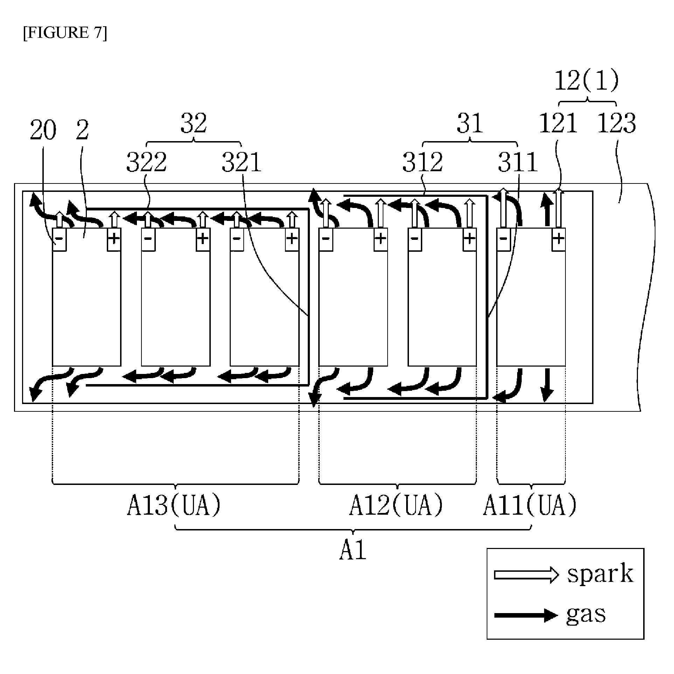

FIG. 7 illustrates discharge paths of spark and gas in a module array according to the second embodiment. Referring to FIG. 7, when thermal runaway occurs in the battery pack P according to the embodiment, the gas generated from the first unit module array A11 are directly discharged in front and rear directions, melts the gasket 13 at high temperatures and then discharged between the upper frame 11 and the lower frame 12. Here, the gas generated from the first unit module array A11 is discharged in front and rear directions rather than the upward direction where the connector block 110 is installed or the second widthwise direction such that ignition does not occur at the connector block 110 due to insufficient combustible material despite spark generation and contact with external oxygen.

The gas generated from the second unit module array A12 and third unit module array A13 flows along the passage inside the blocking members 31 and 32 in the first widthwise direction and is then discharged in front and rear directions. After melting the gasket 13 at high temperature, the gas is discharged between the upper frame 11 and the lower frame 12. Here, the spark generated at the terminal 20 is blocked by the blocking portions 312 and 322 of the blocking members 31 and 32 such that contact with external oxygen is prevented. Accordingly, while the gas and external oxygen come into contact with each other at the front and rear of the pack frame 1, no energy above the ignition point is supplied, and thus ignition does not occur as the spark does not reach.

In addition, since the end of the blocking portion 312 of the first blocking member 31 is spaced apart from the second blocking member 32 in the widthwise direction and/or front and rear directions, the gas generated in the second unit module array A12 may be more smoothly guided in the first widthwise direction and front and rear directions.

Meanwhile, according to the embodiment, the partitions 311 and 322 of the blocking members 31 and 32 prevent direct thermal propagation between the first unit module array A11 and the second unit module array A12 and between the second unit module array A12 and the third unit module array A13 such that the occurrence of thermal runaway in successive pack units is suppressed.

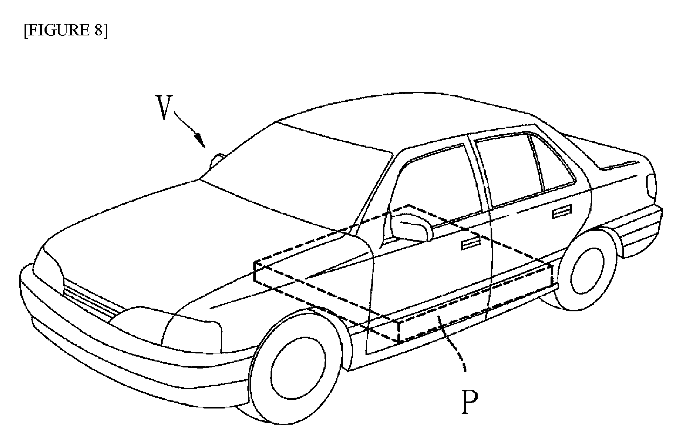

FIG. 8 illustrates a vehicle including a battery pack according to an embodiment of the present invention. Referring to FIG. 8, the battery pack P may be incorporated into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a pack frame;
a connector block having an exposed upper portion and installed in the pack frame;
a module array comprising a plurality of battery modules arranged from a first widthwise end of the connector block along a widthwise direction; and
a blocking member arranged with the plurality of battery modules in the widthwise direction, the blocking member dividing the module array into a plurality of unit module arrays, each of the plurality of unit module arrays comprising one or more battery modules,
wherein the blocking member comprises: a partition interposed between and dividing a pair of adjacent unit module arrays; and a pair of blocking portions extending from the partition in a first widthwise direction.

2. The battery pack of claim 1, wherein the pack frame comprises:
a connecting portion where the connector block is installed;
a first accommodating portion connected to a first widthwise end of the connecting portion; and
a second accommodating portion connected to a second widthwise end of the connecting portion;
wherein the module array comprises:
a first module array accommodated in the first accommodating portion and arranged adjacent to the first widthwise end of the connector block; and
a second module array accommodated in the second accommodating portion and arranged adjacent to a second widthwise end of the connector block.

3. The battery pack of claim 1, wherein the pack frame comprises: an upper frame covering an upper portion of a first module array and having the connector block installed thereon; and a lower frame covering a lower portion of the first module array.

4. The battery pack of claim 3, wherein a gasket is interposed between the upper frame and the lower frame.

5. The battery pack of claim 1, further comprising a terminal exposed at at least one of front and rear ends of each of the plurality of battery modules intersecting the widthwise direction.

6. The battery pack of claim 1, wherein each of the plurality of unit module arrays excluding one closest to the connector block, comprises same number of battery modules as or more than number of battery modules in other unit module array adjacent to a second widthwise end.

7. The battery pack of claim 1, wherein each of the unit module arrays, excluding one closest to the connector block, comprises same number of battery modules.

8. The battery pack of claim 1, wherein the blocking members are arranged so as to avoid front and rear of a first one closest to the connector block among the plurality of unit module arrays.

9. The battery pack of claim 1, wherein the plurality of blocking members are arranged at a predetermined distance from each other in the widthwise direction.

10. The battery pack of claim 1, wherein the pair of blocking portions are spaced apart from front and rear of each of plurality of the battery modules by a predetermined distance or more.

11. The battery pack of claim 1, wherein the distance between the pair of blocking portions in front and rear directions increases as a distance between the blocking member and the connector block increases.

12. A vehicle comprising a battery pack of any one of claims 1 to 11.
